# EUROPÄISCHE PATENTSCHRIFT

(11) **EP 2 852 794 B1**
(45) Veröffentlichungstag und Bekanntmachung des Hinweises auf die Patenterteilung: **20.11.2019**
(21) Anmeldenummer: 13731924.0
(22) Anmeldetag: 15.05.2013
(51) Int. Cl.: B23P 19/04, F24C 3/00, F24C 3/12

(54) **GASBEHEIZTES GARGERÄT**
GAS-HEATED COOKING DEVICE
APPAREIL DE CUISSON A GAZ

(30) Priorität: 22.05.2012 ES 201230761
(43) Veröffentlichungstag der Anmeldung: 01.04.2015
(73) Patentinhaber: BSH Hausgeräte GmbH, 81739 München (DE)
(72) Erfinder: ANDRADE SOARES, Paulo Marcos, 39012 Santander (ES); GUTIERREZ HUMARA, Melca, 39650 La Penilla (ES); PEÑA MARTÍN, Oscar, 39478 Boo de Pielagos (ES); PLACER MARURI, Emilio, 39120 Liencres (ES)
(86) Internationale Anmeldenummer: PCT/IB2013/053951
(87) Internationale Veröffentlichungsnummer: WO 2013/175350

(56) Entgegenhaltungen:
- FR-A1- 2 177 598
- FR-A1- 2 472 724
- US-A1- 2005 257 784
- US-A1- 2007 044 786

## Beschreibung

Die vorliegende Erfindung betrifft ein gasbeheiztes Gargerät.

Gasbeheizte Gargeräte weisen regelmäßig mehrere Gasventile auf. Die Gasventile sind jeweils mit einem Anschluss versehen, um ein jeweiliges Gasventil mit einer Gasleitung zu verbinden.

Die US 2007/0044786 A1 beschreibt eine Ventilanordnung für ein gasbeheiztes Haushaltsgerät mit einer Gasleitung, zumindest einem Gasventil und einem Verbindungsteil zum Fixieren des zumindest einen Gasventils an der Gasleitung.

Die FR 2 472 724 A1 beschreibt ebenfalls eine Ventilanordnung für ein gasbeheiztes Haushaltsgerät. Die Ventilanordnung umfasst zumindest ein Gasventil, eine Gasleitung und ein Verbindungsteil zum Fixieren des zumindest einen Gasventils an der Gasleitung.

Aufgabe der vorliegenden Erfindung ist es, ein verbessertes gasbeheiztes Gargerät bereitzustellen, welches sich bevorzugt durch einen einfachen Aufbau auszeichnet.

Zur Lösung dieser Aufgabe wird ein gasbeheiztes Gargerät mit zumindest einem Gasventil, einer Gasleitung, einem Gehäuseteil und einem Trägerteil vorgeschlagen. Das zumindest eine Gasventil weist einen Anschluss auf. Die Gasleitung ist mit dem Anschluss verbunden, um das Gasventil mit Gas zu versorgen. Das Trägerteil ist an dem Gehäuseteil befestigt. Weiterhin fixiert das Trägerteil die Gasleitung relativ zu dem Anschluss. Das Trägerteil ist zumindest teilweise aus Kunststoff hergestellt. Das Trägerteil weist eine Aufnahme für das Gasventil auf. Die Aufnahme ist als Zentriermittel für ein Zentrieren des Gasventils relativ zu einem weiteren Gehäuseteil ausgebildet.

Dadurch, dass das Trägerteil einerseits an dem Gehäuseteil befestigt ist und das Trägerteil andererseits die Gasleitung relativ zu dem Anschluss fixiert, ergibt sich ein einfacher Aufbau. Bevorzugt weist das gasbeheizte Gargerät mehrere Gasventile auf. Jedes der mehreren Gasventile umfasst einen Anschluss. Jeder der Anschlüsse ist mit der Gasleitung verbunden. Bevorzugt fixiert das Trägerteil die Gasleitung relativ zu den mehreren Anschlüssen. Dadurch vereinfacht sich eine Montage des gasbeheizten Gargeräts. Das Fixieren der Gasleitung mittels des Trägerteils kann lediglich eine Vormontage darstellen, welche eine Montage des gasbeheizten Gargeräts insgesamt vereinfacht. Im Rahmen einer Hauptmontage können zusätzlich Mittel vorgesehen werden, welche die Gasleitung mit dem Gasventil selbst direkt verbinden.

Eine gasleitende Verbindung zwischen der Gasleitung und dem Anschluss kann beispielsweise dadurch hergestellt werden, dass der Anschluss einen hohlen Dorn aufweist, welcher die Gasleitung radial durchsticht.

Gemäß einer Ausführungsform ist für das Fixieren zumindest eine Rohrschelle vorgesehen, welche an ihrem Umfang geteilt und verschließbar ist, um die Gasleitung aufzunehmen. Dadurch lässt sich die Gasleitung radial zu ihrer Längsrichtung in die Rohrschelle einbringen, was eine einfache Montage, beispielsweise von oberhalb des Trägerteils, ermöglicht.

Gemäß einer weiteren Ausführungsform sind Enden der Rohrschelle für das Verschließen derselben elastisch miteinander in Eingriff bringbar. Dies vereinfacht eine Montage noch weiter. Dazu kann die Rohrschelle (oder zumindest deren Enden) aus einem elastischen Material, insbesondere Kunststoff, hergestellt sein.

Gemäß einer weiteren Ausführungsform sind mehrere Gasventile mit einem jeweiligen Anschluss vorgesehen, welche in Längsrichtung der Gasleitung nebeneinander angeordnet sind. Bevorzugt fixiert das Trägerteil die Gasleitung relativ zu einem jeweiligen Anschluss. Dadurch ergibt sich ein einfacher Aufbau.

Gemäß einer weiteren Ausführungsform sind mehrere der Rohrschellen vorgesehen, welche in Längsrichtung der Gasleitung verteilt zwischen den Gasventilen angeordnet sind. Dadurch kann die Gasleitung auch über längere Strecken genau positioniert werden.

Das Trägerteil ist zumindest teilweise aus Kunststoff hergestellt. Dadurch lässt sich dieses einfach herstellen.

Das Trägerteil weist eine Aufnahme für das Gasventil auf. Somit fixiert das Trägerteil nicht nur die Gasleitung, sondern auch ein oder mehrere Gasventile.

Gemäß einer weiteren Ausführungsform ist die Aufnahme kreissegmentförmig ausgebildet. Bevorzugt umspannt die Aufnahme einen Winkel größer 180°. Dadurch ergibt sich eine radiale Fixierung des Gasventils in der Aufnahme.

Das Trägerteil weist Zentriermittel für ein Zentrieren des Gasventils relativ zu dem Gehäuseteil oder zu einem weiteren Gehäuseteil auf. Bevorzugt dient die Aufnahme gleichzeitig als Zentriermittel.

Gemäß einer weiteren Ausführungsform weist das Trägerteil Haltemittel für eine Platine auf. Die Platine trägt elektronische Komponenten, beispielsweise Leuchtmittel, insbesondere LEDs, Widerstände, eine Anzeigeeinrichtung, eine Eingabeeinrichtung und/oder einen Mikroprozessor.

Gemäß einer weiteren Ausführungsform ist das Gehäuseteil ein unteres Gehäuseteil. Zusätzlich oder alternativ kann das weitere Gehäuseteil ein oberes Gehäuseteil ausbilden. Bevorzugt sind in dem oberen Gehäuseteil Öffnungen für ein Hindurchreichen von Betätigungswellen der Gasventile gebildet.

Gemäß einer weiteren Ausführungsform ist das Gehäuseteil oder das weitere Gehäuseteil aus Blech hergestellt. Dies ist kostengünstig.

Das Gehäuseteil und das weitere Gehäuseteil können miteinander verbunden sein, um ein geschlossenes Gehäuse auszubilden.

Gemäß einer weiteren Ausführungsform ist das Gargerät als Kochfeld ausgebildet.

Weiterhin wird ein Verfahren zum Montieren eines gasbeheizten Gargeräts, insbesondere des erfindungsgemäßen Gargeräts, vorgeschlagen. Bei dem Verfahren wird ein Trägerteil an einem Gehäuseteil befestigt. Ferner wird mittels des Trägerteils eine Gasleitung relativ zu einem Anschluss eines Gasventils fixiert. Das Trägerteil wird zumindest teilweise aus Kunststoff hergestellt. Das Gasventil wird mit Hilfe einer Aufnahme des Trägerteils aufgenommen. Das Gasventil wird mit Hilfe der Aufnahme des Trägerteils, die als Zentriermittel ausgebildet ist, relativ zu einem weiteren Gehäuseteil zentriert.

Das Trägerteil zentriert das Gasventil relativ zu dem Gehäuseteil oder einem weiteren Gehäuseteil.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen dabei:
Fig. 1A: in einer Explosionsansicht perspektivisch einen ersten Zustand bei einer Montage eines Gargeräts gemäß einer Ausführungsform;
Fig. 1B: in einer perspektivischen Ansicht Bauteile aus Fig. 1A im zusammengesetzten Zustand;
Fig. 2A: in einer Explosionsansicht perspektivisch einen zweiten Zustand bei der Montage des Gargeräts;
Fig. 2B: in einer perspektivischen Ansicht Bauteile aus Fig. 2A im zusammengesetzten Zustand:
   Fig. 3A: in einer Explosionsansicht im Schnitt gesehen einen dritten Zustand bei der Montage des Gargeräts;
   Fig. 3B: Bauteile aus Fig. 3A im zusammengesetzten Zustand;
   Fig. 4A: in einer Explosionsansicht perspektivisch einen vierten Zustand bei der Montage des Gargeräts;
   Fig. 4B: in einer perspektivischen Ansicht Bauteile aus Fig. 4A im zusammengesetzten Zustand;
   Fig. 5A: in einer Explosionsansicht perspektivisch einen fünften Zustand bei der Montage des Gargeräts; und
   Fig. 5B: in einer perspektivischen Ansicht Bauteile aus Fig. 5A im zusammengesetzten Zustand.

In den Figuren bezeichnen gleiche Bezugszeichen gleiche oder funktionsgleiche Elemente soweit nichts Gegenteiliges angegeben ist.

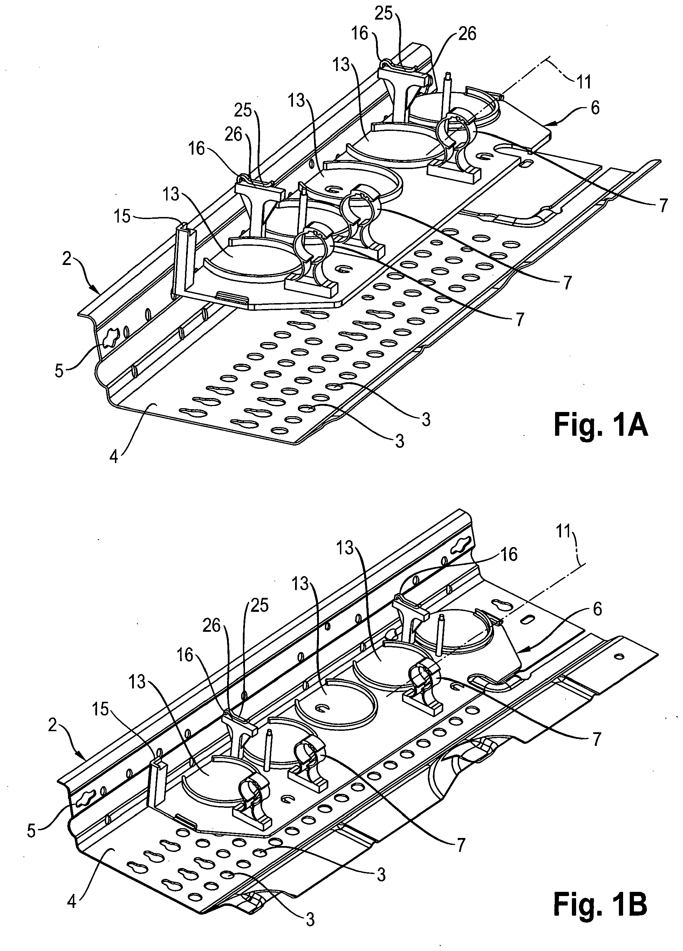

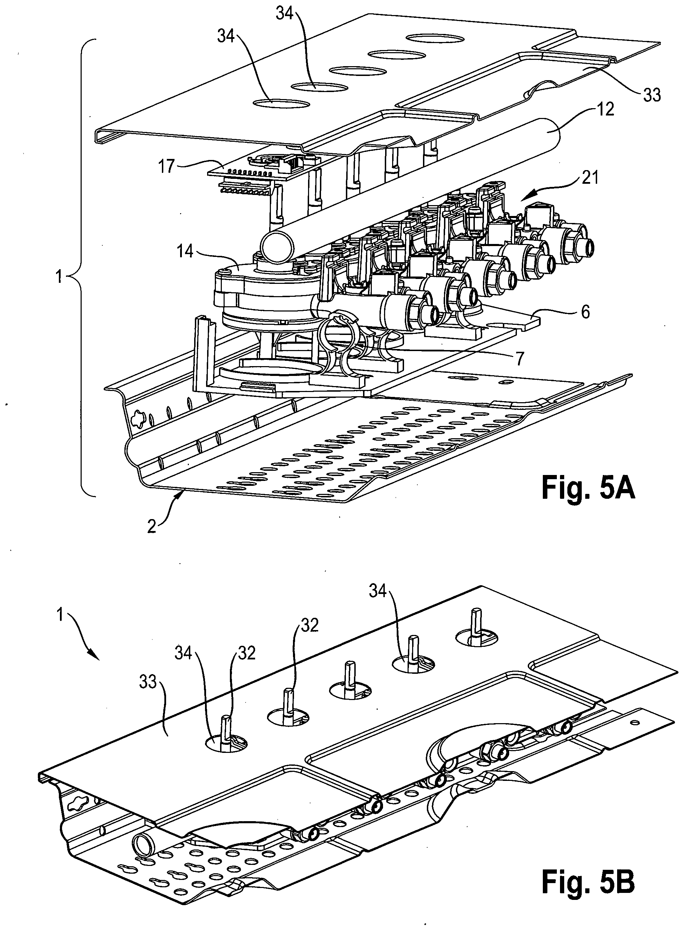

Fig. 1A zeigt in einer Explosionsansicht perspektivisch einen ersten Zustand bei einer Montage eines Gargeräts 1 (siehe Fig. 5A und 5B). Fig. 1B zeigt in einer perspektivischen Ansicht Bauteile aus Fig. 1A im zusammengesetzten Zustand.

Das Gargerät 1 kann beispielsweise als ein Kochfeld ausgebildet sein. Dieses ist in Fig. 5B zu erkennen.

Das Gargerät 1 umfasst ein erstes Gehäuseteil in Form eines Bodenblechs 2. Das Bodenblech 2 kann Löcher 3 zur Zuführung von Primärluft aufweisen. Weiter kann das Bodenblech 2 einen horizontalen Abschnitt 4 und einen vertikalen Abschnitt 5 aufweisen.

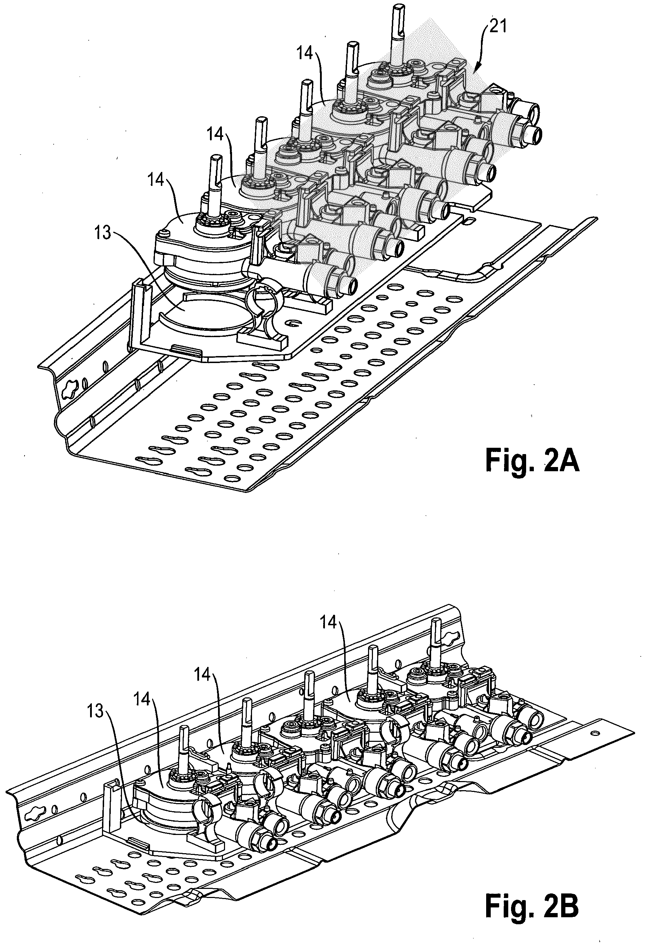

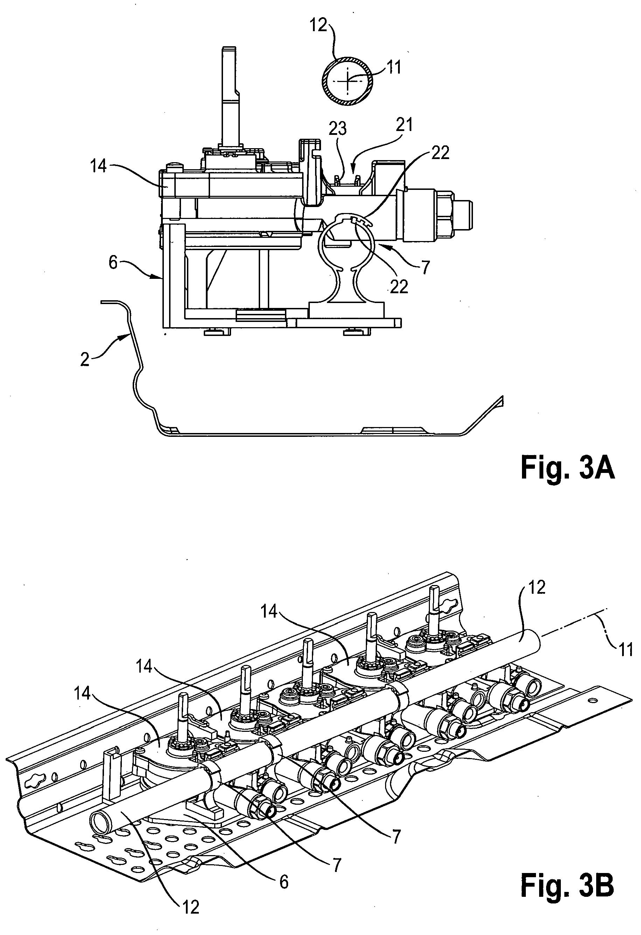

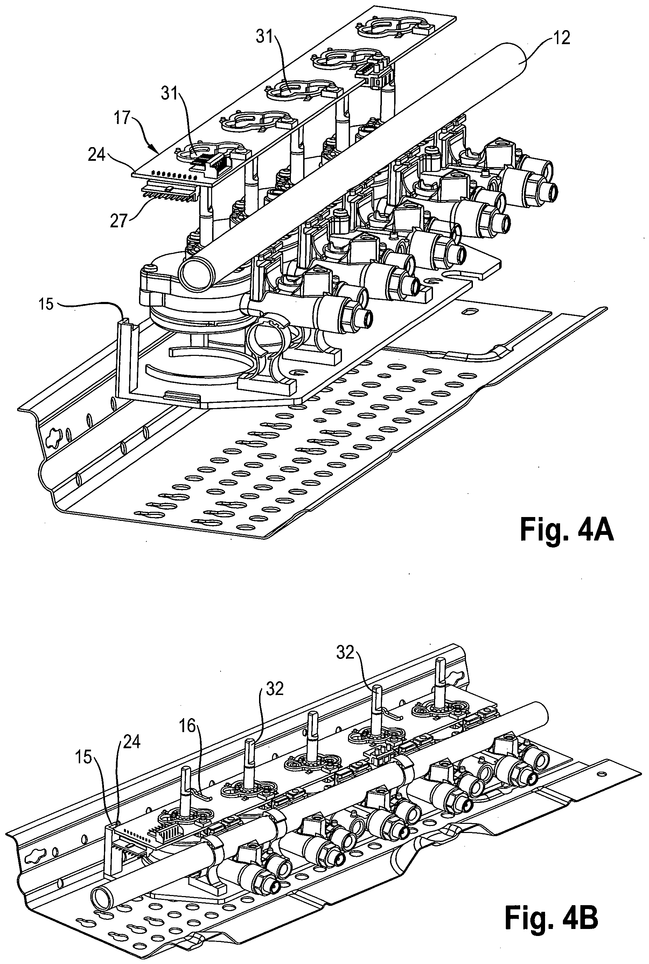

Ferner umfasst das Gargerät 1 ein Trägerteil 6, welches beispielsweise aus Kunststoff ausgebildet ist. Das Trägerteil 6 umfasst mehrere Rohrschellen 7. Die Rohrschellen 7 sind in Längsrichtung 11 einer beispielsweise in Fig. 3B gezeigten Gasleitung 12 angeordnet. Weiterhin umfasst das Trägerteil 6 mehrere Aufnahmen 13. Eine jeweilige Aufnahme 13 ist in Form einer kreissegmentförmigen Ausnehmung gebildet, welche einen Winkel von beispielsweise größer 180°, insbesondere 200-300°, einschließt. In den Aufnahmen 13 sind jeweils Gasventile 14, wie beispielsweise in Fig. 2B gezeigt, aufnehmbar. Noch weiterhin weist das Trägerteil 6 Halteelemente 15, 16 zum Halten einer beispielsweise in Fig. 4A gezeigten Platine 17 auf.

In einem ersten Schritt wird nun das Trägerteil 6 mit dem Bodenblech 2 verbunden. Dazu kann das Trägerteil 6 entweder mit dem horizontalen oder dem vertikalen Abschnitt 4, 5 oder mit beiden verbunden werden. Für das Verbinden können Schrauben und/oder Klebstoff verwendet werden. Fig. 1B zeigt den verbundenen Zustand des Bodenblechs 2 mit dem Trägerteil 6.

Fig. 2A zeigt in einer Explosionsansicht perspektivisch einen zweiten Zustand bei der Montage des Gargeräts 1. Fig. 2B zeigt perspektivisch Bauteile aus Fig. 2A im zusammengesetzten Zustand.

Im Anschluss an den in den Figuren 1A und 1B gezeigten Zustand werden nun die Gasventile 14 jeweils in die Aufnahmen 13 gesetzt. Dadurch ist ein jeweiliges Gasventil 14 mit dem Trägerteil 6 radial fest verbunden. Der entsprechende Zustand ist in Fig. 2B gezeigt.

Fig. 3A zeigt in einer Explosionsansicht geschnitten einen dritten Zustand bei der Montage des Gargeräts 1. Fig. 3B zeigt in einer perspektivischen Ansicht Bauteile aus Fig. 3A im zusammengesetzten Zustand.

Ein jeweiliges Gasventil 14 umfasst einen Anschluss 21. Mit einem jeweiligen Anschluss 21 wird die Gasleitung 12 dadurch verbunden, dass diese auf die Anschlüsse 21 gedrückt wird. Zuvor allerdings werden die Rohrschellen 7 an deren jeweiligen Umfang geöffnet, wozu Enden 22 (siehe Fig. 3A) einer jeweiligen Rohrschelle 7 außer Eingriff gebracht werden. Anschließend wird die Gasleitung 12 in eine jeweilige Rohrschelle 7 radial bezogen auf die Längsrichtung 11 der Gasleitung 12 eingesetzt, woraufhin die Enden 22 wieder elastisch miteinander in Eingriff gebracht werden. Eine gasleitende Verbindung zwischen der Gasleitung 12 und einem jeweiligen Anschluss 21 kann derart vorgesehen sein, dass der Anschluss 21 einen hohlen, gasleitenden Dorn 23 umfasst, welcher die Gasleitung 12 radial durchdringt, wenn diese auf den Dorn 23 aufgepresst wird. Anschließend halten die Rohrschellen 7 die Gasleitung 12 in dem mit den Anschlüssen 21 gasleitend verbundenen Zustand. Dieser Zustand ist in Fig. 3B gezeigt.

Fig. 4A zeigt in einer Explosionsansicht perspektivisch einen vierten Zustand bei der Montage des Gargeräts 1. Fig. 4B zeigt perspektivisch Bauteile aus Fig. 4A im zusammengesetzten Zustand.

Im Anschluss an den in den Figuren 3A und 3B gezeigten Zustand wird die Platine 17 mittels der Halteelemente 15, 16 auf dem Trägerteil 6 montiert. Die Halteelemente 15 können dabei derart beschaffen sein, dass sie jeweils eine Ecke 24 der Platine 17 umgreifen. Die Halteelemente 16 können dagegen in Fig. 1A zu erkennende Klammern 25 aufweisen, welche die Platine 17 gegen einen Anschlag 26 reibschlüssig drücken. Der entsprechende Zustand ist in Fig. 4B gezeigt.

Die Platine 17 weist verschiedene elektronische Bauelemente, beispielsweise einen Stecker 27 sowie beispielsweise einen nicht gezeigten Mikroprozessor auf. Außerdem weist die Platine 17 Öffnungen 31 auf. Durch eine jeweilige Öffnung 31 erstreckt sich eine Betätigungswelle 32 (siehe Fig. 4B) eines jeweiligen Gasventils 14 im zusammengesetzten Zustand, um einen Gasfluss zu nicht dargestellten Brennern des Gargeräts 1 zu regulieren.

Fig. 5A zeigt in einer Explosionsansicht perspektivisch einen fünften Zustand bei der Montage des Gargeräts 1. Fig. 5B zeigt in einer perspektivischen Ansicht die Bauteile aus Fig. 5A im zusammengesetzten Zustand.

Im Anschluss an den in den Figuren 4A und 4B gezeigten Zustand wird nun ein zweites Gehäuseteil in Form eines Abdeckblechs 33 auf das Bodenblech 2 aufgesetzt und mit diesem fest verbunden. Das Abdeckblech 33 weist ebenfalls Öffnungen 34 für ein Hindurchgreifen der Betätigungswellen 32 im zusammengesetzten Zustand auf. Dieser Zustand ist in Fig. 5B gezeigt. Die Aufnahmen 13 des Trägerteils 6 fungieren als Zentriermittel und zentrieren die Gasventile 14, insbesondere deren Betätigungswellen 32, gegenüber den Öffnungen 34 in dem Abdeckblech 33.

### Verwendete Bezugszeichen:

- 1: Gargerät
- 2: Bodenblech
- 3: Löcher
- 4: Abschnitt
- 5: Abschnitt
- 6: Trägerteil
- 7: Rohrschelle
- 11: Längsrichtung
- 12: Gasleitung
- 13: Aufnahme
- 14: Gasventil
- 15: Halteelement
- 16: Halteelement
- 17: Platine
- 21: Anschluss
- 22: Ende
- 23: Dorn
- 24: Ecke
- 25: Klammer
- 26: Anschlag
- 27: Stecker
- 31: Öffnung
- 32: Betätigungswelle
- 33: Abdeckblech
- 34: Öffnung

## Patentansprüche

1. Gasbeheiztes Gargerät (1) mit zumindest einem Gasventil (14), welches einen Anschluss (21) aufweist, einer Gasleitung (12), welche mit dem Anschluss (21) verbunden ist, um das Gasventil (14) mit Gas zu versorgen, einem Gehäuseteil (2) und einem Trägerteil (6), welches an dem Gehäuseteil (2) befestigt ist und die Gasleitung (12) relativ zu dem Anschluss (21) fixiert, wobei das Trägerteil (6) zumindest teilweise aus Kunststoff hergestellt ist, wobei das Trägerteil (6) eine Aufnahme (13) für das Gasventil (14) aufweist und wobei die Aufnahme (13) als Zentriermittel für ein Zentrieren des Gasventils (14) relativ zu einem weiteren Gehäuseteil (33) des Gargeräts (1) ausgebildet ist.

2. Gargerät nach Anspruch 1, **dadurch gekennzeichnet, dass** für das Fixieren zumindest eine Rohrschelle (7) vorgesehen ist, welche an ihrem Umfang geteilt und verschließbar ist, um die Gasleitung (12) aufzunehmen.

3. Gargerät nach Anspruch 2, **dadurch gekennzeichnet, dass** Enden (22) der Rohrschelle (7) für das Verschließen derselben elastisch miteinander in Eingriff bringbar sind.

4. Gargerät nach einem der Ansprüche 1 - 3, **dadurch gekennzeichnet, dass** mehrere Gasventile (14) mit einem jeweiligen Anschluss (21) vorgesehen sind, welche in Längsrichtung (11) der Gasleitung (12) nebeneinander angeordnet sind, und dass das Trägerteil (6) die Gasleitung (12) relativ zu einem jeweiligen Anschluss (21) fixiert.

5. Gargerät nach Anspruch 4, **dadurch gekennzeichnet, dass** mehrere Rohrschellen (7) vorgesehen sind, welche in Längsrichtung (11) der Gasleitung (12) verteilt zwischen den Gasventilen (14) angeordnet sind.

6. Gargerät nach einem der Ansprüche 1 - 5, **dadurch gekennzeichnet, dass** die Aufnahme (13) kreissegmentförmig ausgebildet ist.

7. Gargerät nach einem der Ansprüche 1 - 6, **dadurch gekennzeichnet, dass** das Trägerteil (6) Haltemittel (15, 16) für eine Platine (17) aufweist.

8. Gargerät nach einem der Ansprüche 1 - 7, **dadurch gekennzeichnet, dass** das Gehäuseteil (2) ein unteres Gehäuseteil und/oder das weitere Gehäuseteil (33) ein oberes Gehäuseteil ist.

9. Gargerät nach einem der Ansprüche 1 - 8, **dadurch gekennzeichnet, dass** das Gehäuseteil (2) und/oder das weitere Gehäuseteil (33) aus Blech hergestellt ist.

10. Gargerät nach einem der Ansprüche 1 - 9, **dadurch gekennzeichnet, dass** das Gargerät (1) als Gaskochfeld ausgebildet ist.

11. Verfahren zum Montieren eines gasbeheizten Gargeräts nach einem der Ansprüche 1 - 10, wobei ein Trägerteil (6) an einem Gehäuseteil (2) befestigt wird und ferner mittels des Trägerteils (6) eine Gasleitung (12) relativ zu einem Anschluss (21) eines Gasventils (14) fixiert wird, wobei das Trägerteil (6) zumindest teilweise aus Kunststoff hergestellt wird, wobei das Gasventil (14) mit Hilfe einer Aufnahme (13) des Trägerteils (6) aufgenommen wird, und wobei das Gasventil (14) mit Hilfe der Aufnahme (13) des Trägerteils (6), die als Zentriermittel ausgebildet ist, relativ zu einem weiteren Gehäuseteil (33) des Gargeräts (1) zentriert wird.

## Claims

1. Gas-heated cooking device (1) having at least one gas valve (14) which has a connection (21), a gas line (12) which is connected to the connection (21) in order to supply the gas valve (14) with gas, a housing part (2), and a carrier part (6) which is fastened to the housing part (2) and fixes the gas line (12) relative to the connection (21), wherein the carrier part (6) is made at least partially from plastic, wherein the carrier part (6) has a receptacle (13) for the gas valve (14) and wherein the receptacle (13) is embodied as a centring means (13) for centring the gas valve (14) relative to a further housing part (33) of the cooking device (1).

2. Cooking device according to claim 1, **characterised in that** at least one pipe bracket (7) is provided for the fixing, and at its periphery is divided and closable in order to receive the gas line (12).

3. Cooking device according to claim 2, **characterised in that** ends (22) of the pipe bracket (7) can be brought elastically into engagement with one another for closing the same.

4. Cooking device according to one of claims 1 - 3, **characterised in that** multiple gas valves (14) are provided with a respective connection (21), which in the longitudinal direction (11) of the gas line (12) are arranged next to one another, and **in that** the carrier part (6) fixes the gas line (12) relative to a respective connection (21).

5. Cooking device according to claim 4, **characterised in that** multiple pipe brackets (7) are provided, which in the longitudinal direction (11) of the gas line (12) are arranged distributed between the gas valves (14).

6. Cooking device according to one of claims 1 - 5, **characterised in that** the receptacle (13) is embodied in the shape of a circular segment.

7. Cooking device according to one of claims 1 - 6, **characterised in that** the carrier part (6) has retaining means (15, 16) for a circuit board (17).

8. Cooking device according to one of claims 1 - 7, **characterised in that** the housing part (2) is a lower housing part and/or the further housing part (33) is an upper housing part.

9. Cooking device according to one of claims 1 - 8, **characterised in that** the housing part (2) and/or the further housing part (33) is made of sheet metal.

10. Cooking device according to one of claims 1 - 9, **characterised in that** the cooking device (1) is embodied as a gas hob.

11. Method for mounting a gas-heated cooking device according to one of claims 1 - 10, wherein a carrier part (6) is fastened to a housing part (2) and furthermore a gas line (12) is fixed relative to a connection (21) of a gas valve (14) by means of the carrier part (6), wherein the carrier part (6) is made at least partially from plastic, wherein the gas valve (14) is received with the help of a receptacle (13) of the carrier part (6), and wherein the gas valve (14) is centred relative to a further housing part (33) of the cooking device (1) with the help of the receptacle (13) of the carrier part (6) which is embodied as a centring means.

## Revendications

1. Appareil de cuisson à gaz (1) avec au moins une soupape à gaz (14), qui présente un raccordement (21), une conduite de gaz (12), qui est reliée au raccordement (21), afin d'alimenter la soupape à gaz (14) en gaz, une pièce de carcasse (2) et une pièce de support (6), qui est fixée à la pièce de carcasse (2) et fixe la conduite de gaz (12) par rapport au raccordement (21), dans lequel la pièce de support (6) est au moins partiellement fabriquée en plastique, dans lequel la pièce de support (6) présente un logement (13) pour la soupape à gaz (14) et dans lequel le logement (13) est exécuté sous forme de moyen de centrage pour un centrage de la soupape à gaz (14) par rapport à une pièce de carcasse supplémentaire (33) de l'appareil de cuisson (1).

2. Appareil de cuisson selon la revendication 1, **caractérisé en ce qu'**au moins une bride pour tuyaux (7) est prévue pour la fixation, laquelle est divisée sur son pourtour et peut être fermée, afin d'accueillir la conduite de gaz (12).

3. Appareil de cuisson selon la revendication 2, **caractérisé en ce que** les extrémités (22) de la bride pour tuyaux (7) peuvent être portées en engrènement de façon élastique l'une avec l'autre pour la fermeture.

4. Appareil de cuisson selon l'une des revendications 1 à 3, **caractérisé en ce que** plusieurs soupapes à gaz (14) avec un raccordement (21) respectif sont prévues, disposées l'une à côté de l'autre dans le sens longitudinal (11) de la conduite de gaz (12), et **en ce que** la pièce de support (6) fixe la conduite de gaz (12) par rapport à un raccordement respectif (21).

5. Appareil de cuisson selon la revendication 4, **caractérisé en ce que** plusieurs brides pour tuyaux (7) sont prévues, lesquelles sont disposées dans le sens longitudinal (11) de la conduite de gaz (12) en étant réparties entre les soupapes à gaz (14).

6. Appareil de cuisson selon l'une des revendications 1 à 5, **caractérisé en ce que** le logement (13) est exécuté en forme de segment circulaire.

7. Appareil de cuisson selon l'une des revendications 1 à 6, **caractérisé en ce que** la pièce de support (6) présente des moyens de retenue (15, 16) pour une platine (17).

8. Appareil de cuisson selon l'une des revendications 1 à 7, **caractérisé en ce que** la pièce de carcasse (2) est une pièce de carcasse inférieure et/ou la pièce de carcasse supplémentaire (33) est une pièce de carcasse supérieure.

9. Appareil de cuisson selon l'une des revendications 1 à 8, **caractérisé en ce que** la pièce de carcasse (2) et/ou la pièce de carcasse supplémentaire (33) est fabriquée en tôle.

10. Appareil de cuisson selon l'une des revendications 1 à 9, **caractérisé en ce que** l'appareil de cuisson (1) est exécuté sous forme de champ de cuisson à gaz.

11. Procédé de montage d'un appareil de cuisson à gaz selon l'une des revendications 1 à 10, dans lequel une pièce de support (6) est fixée à une pièce de carcasse (2) et une conduite de gaz (12) est en outre fixée par rapport à un raccordement (21) d'une soupape à gaz (14) au moyen de la pièce de support (6), dans lequel la pièce de support (6) est au moins partiellement fabriquée en plastique, dans lequel la soupape à gaz (14) est intégrée à l'aide d'un logement (13) de la pièce de support (6) et dans lequel la soupape à gaz (14) est centrée à l'aide du logement (13) de la pièce de support (6), exécutée sous forme de moyen de centrage, par rapport à une pièce de carcasse supplémentaire (33) de l'appareil de cuisson (1).
